# EUROPEAN PATENT APPLICATION

(11) **EP 3 686 853 A1**
(43) Date of publication of application: **29.07.2020**
(21) Application number: 20151359.5
(22) Date of filing: 13.01.2020
(51) Int. Cl.: G07F 11/00

(54) **METHOD OF SALES THROUGH A MULTI-SIDED VENDING MACHINE AND RELATED DEVICE**

(30) Priority: 22.01.2019 US 201916254483
(71) Applicant: Leadot Innovation, Inc., 802 Kaohsiung (TW)
(72) Inventor: Wang, Justin, 106 Taipei City (TW)
(74) Representative: Straus, Alexander

(57) **Abstract**

A multi-sided vending machine (10) includes a housing (11), a product storage compartment (34) disposed within the housing (11), a plurality of displays (20), a user interface (16), a plurality of money acceptors, a plurality of dispensing slots (32), a rotatable ramp (38), a motor (24) and a controller (18) controlling operation of the multi-sided vending machine (10), controlling the motor (24) to turn the rotatable ramp (38) toward the selected side, and controlling the product storage compartment (34) to release the selected item when the selected item is purchased from the selected side.

## Description

### Field of the Invention

The invention relates to vending machines, and more particularly, to a multi-sided vending machine capable of selling items from each of a plurality of sides of the vending machine.

### Background of the Invention

Vending machines are widely used now for selling items such as bottled drinks, canned drinks, cookies, candy, chips, coffee, and even non-food items such as tickets. Traditional vending machines use only one side of the vending machine for interacting with the customer. For instance, the front of the vending machine is used for displaying the products for sale, for accepting payment from the customer, and for dispensing the sold product to the customer. While traditional vending machines do allow the customer to purchase items from the vending machine, only one side of the vending machine is used for selling products to customers. Other sides of the vending machine such as the left side or the right side of the vending machine with respect to the front of the vending machine are left unused and often do not serve to fully promote the products being sold in the vending machine. Furthermore, if the vending machine is selling a popular product at a busy time, there may be a line of people waiting to use the vending machine. Thus, selling products through only one single side of the vending machine causes inconvenience to potential customers of the vending machine, and may force potential customers to decide not to make a purchase at that time due to the long lines associated with the vending machines. Thus, traditional vending machines would benefit from a design that would allow multiple customers to be served at the same time.

It is therefore one of the primary objectives of the claimed invention to provide a multi-sided vending machine for overcoming limitations with traditional vending machines.

### Summary of the Invention

The present invention aims at providing a multi-sided vending machine .

This is achieved by a multi-sided vending machine according to claim 1. The dependent claims pertain to corresponding further developments and improvements.

As will be seen more clearly from the detailed description following below, the claimed multi-sided vending machine includes a housing; a product storage compartment disposed within the housing, the product storage compartment storing items for sale; a plurality of displays disposed outside the housing, each display of the plurality of displays being disposed on a different side of the housing, wherein the displays show images corresponding to the items for sale; a user interface receiving instructions from a customer to purchase a selected item of the items for sale through a selected side of the multi-sided vending machine; a plurality of money acceptors, each money acceptor of the plurality of money acceptors being disposed on a different side of the housing, a money acceptor of the plurality of money acceptors disposed on the selected side receiving money used to pay for the selected item; a plurality of dispensing slots, each dispensing slot of the plurality of dispensing slots being disposed on a different side of the housing, wherein a dispensing slot of the plurality of dispensing slots disposed on the selected side dispenses the selected item to the customer after the selected item is purchased; a rotatable ramp disposed within the housing above the plurality of dispensing slots and rotatable toward any of the different sides of the housing, the rotatable ramp rotating toward the selected side and guiding the selected item into the dispensing slot disposed on the selected side; a motor turning the rotatable ramp toward the selected side when the selected item is purchased from the selected side; and a controller controlling operation of the multi-sided vending machine, controlling the motor to turn the rotatable ramp toward the selected side, and controlling the product storage compartment to release the selected item when the selected item is purchased from the selected side.

### Brief Description of the Drawings

- FIG.1: illustrates a perspective diagram of a multi-sided vending machine showing items for sale according to the present invention;
- FIG.2: illustrates a perspective diagram of the multi-sided vending machine showing advertisements according to the present invention;
- FIG.3: is a functional block diagram of the multi-sided vending machine according to the present invention;
- FIG.4: is a diagram showing internal components of the multi-sided vending machine;
- FIG.5: is a diagram showing a touch panel being overlaid on a display panel;
- FIG.6: illustrates creating a display panel of the plurality of display panels by joining many smaller displays together;
- FIG.7: illustrates rotating multiple display panels of the plurality of display panels toward a same side to build a larger advertising space with the display panels;
- FIG.8: illustrates a multi-sided vending machine having a cylindrical shape according to another embodiment; and
- FIG.9: illustrates a multi-sided vending machine having a hexagonal prism shape according to another embodiment.

### Detailed Description

The present invention improves upon traditional vending machines by using a plurality of sides of the vending machine for selling products in order to create a multi-sided vending machine.

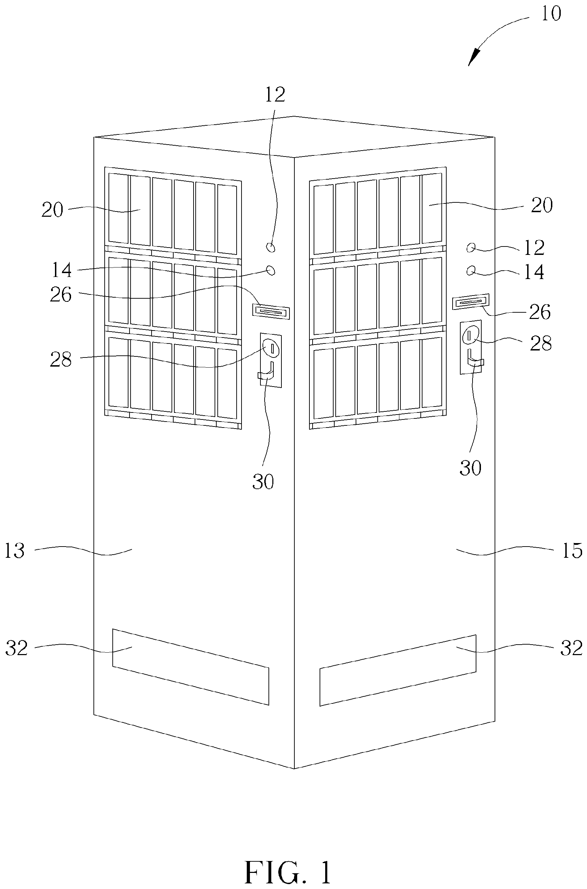

FIG.1 illustrates a perspective diagram of a multi-sided vending machine 10 showing items for sale. The multi-sided vending machine 10 can be any three-dimensional shape having more than one side, is depicted in FIG.1 as a rectangular prism having six sides. It includes a front side, a left side, a rear side, a right side, a top side, and a bottom side. More than one side of the multi-sided vending machine 10 can be used for selling items simultaneously. For example, for a front side 13 and a right side 15 of the multi-sided vending machine 10, the items for sale on the front side 13 can be different from the items for sale on the right side 15. This means that customers can purchase different items on the front side 13 and on the right side 15. The other sides (the rear side and the left side) of the multi-sided vending machine 10 can also be used for selling different items.

Each side of the multi-sided vending machine 10 for selling items can contain similar or identical items to facilitate sales. As shown in FIG.1, the multi-sided vending machine 10 comprises a plurality of proximity sensors 12 and a plurality of cameras 14. The present invention multi-sided vending machine 10 can make use of either the proximity sensors 12 or the cameras 14, or can use a combination of the proximity sensors 12 and the cameras 14 for sensing customers approaching the multi-sided vending machine 10.

The multi-sided vending machine 10 comprises a plurality of display panels 20 on the outer surfaces of different sides of the multi-sided vending machine 10. As shown in FIG.1, the display panels 20 show images of the items for sale on the corresponding sides of the multi-sided vending machine 10. A plurality of bill acceptors 26 and a plurality of coin acceptors 28 are also disposed on outer surfaces of different sides of the multi-sided vending machine 10 for accepting payment from customers. A plurality of dispensing slots 32 on outer surfaces of different sides of the multi-sided vending machine 10 are used for dispensing purchased items to the customers after purchasing on the corresponding side of the multi-sided vending machine 10. For instance, if customers wants to purchase an item on the display panel 20 of the front side 13, the customers would select the item by inserting money into the bill acceptor 26 and/or the coin acceptor 28 on the front side 13, and then he would receive the selected item from the dispensing slot 32 on the front side 13. A plurality of coin return slots 30 can also be disposed on different sides of the multi-sided vending machine 10 for returning coins to the customers.

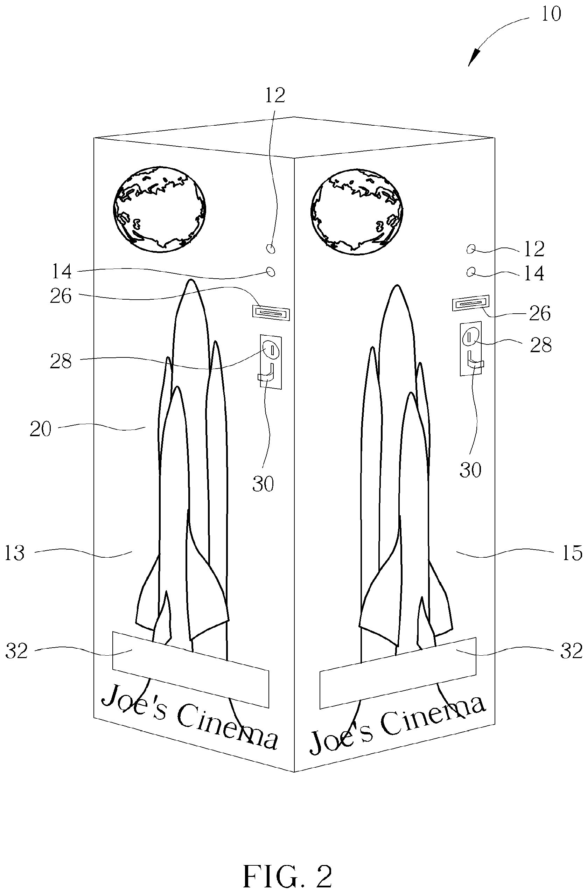

FIG.2 illustrates a perspective diagram of the multi-sided vending machine 10 showing advertisements. When the proximity sensors 12 and the cameras 14 detect that one or more customers approach the multi-sided vending machine 10, the display panels 20 would show items for sale, as shown in FIG.1. The cameras 14 can be video cameras for detecting customers approaching. When the proximity sensors 12 and the cameras 14 do not detect any customers nearby the multi-sided vending machine 10, the display panels 20 can be used for displaying advertisements, as depicted in FIG.2. The advertisement function is optional. If the advertisement function is not included, the proximity sensors 12 and the cameras 14 are also not necessary for the multi-sided vending machine 10, and the display panels can show the items for sale constantly. However, showing advertisements on the display panels 20 can increase revenue of the multi-sided vending machine 10. In other words, the display panels 20 can switch between showing items for sale and showing advertisements, depending on the whether one or more customers are detected by the sensors 12 or cameras 14 of the multi-sided vending machine 10.

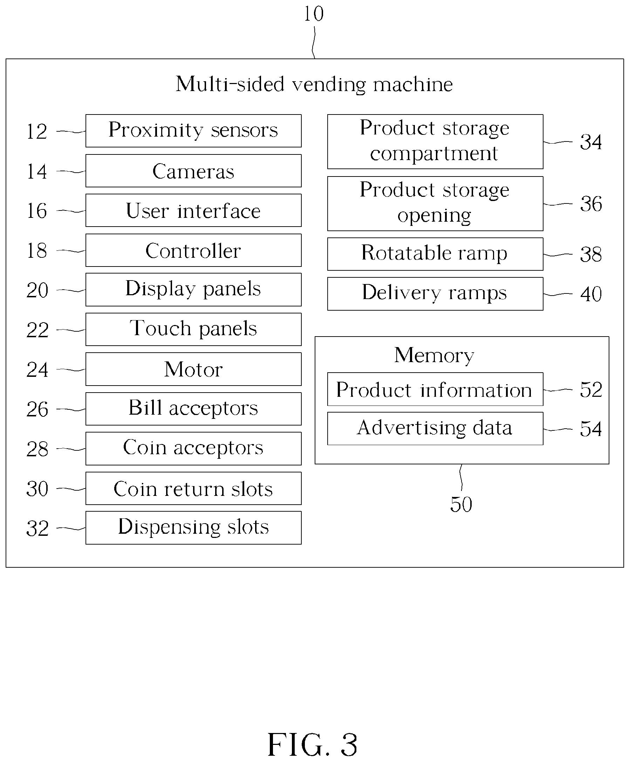

FIG.3 is a functional block diagram of the multi-sided vending machine 10. The proximity sensors 12, the cameras 14, the display panels 20, the bill acceptors 26, the coin acceptors 28, and the coin return slots 30 of the multi-sided vending machine 10 have been described previously. The other components are described in the following paragraphs.

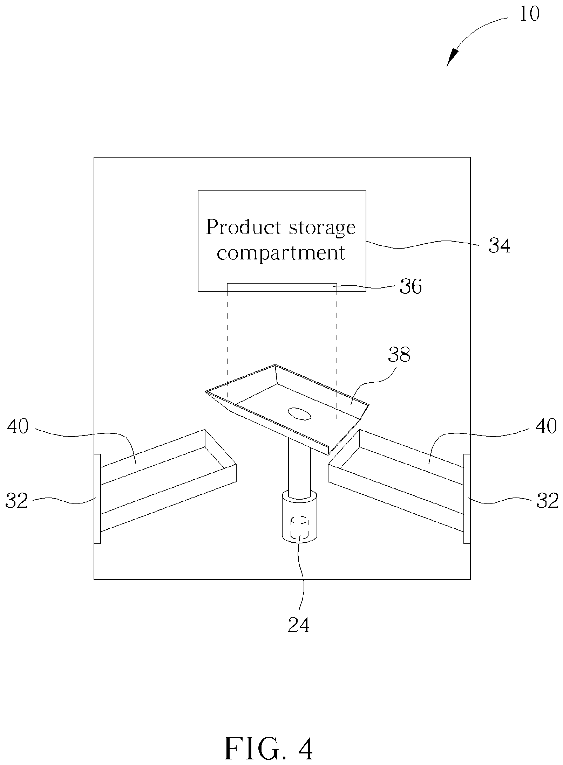

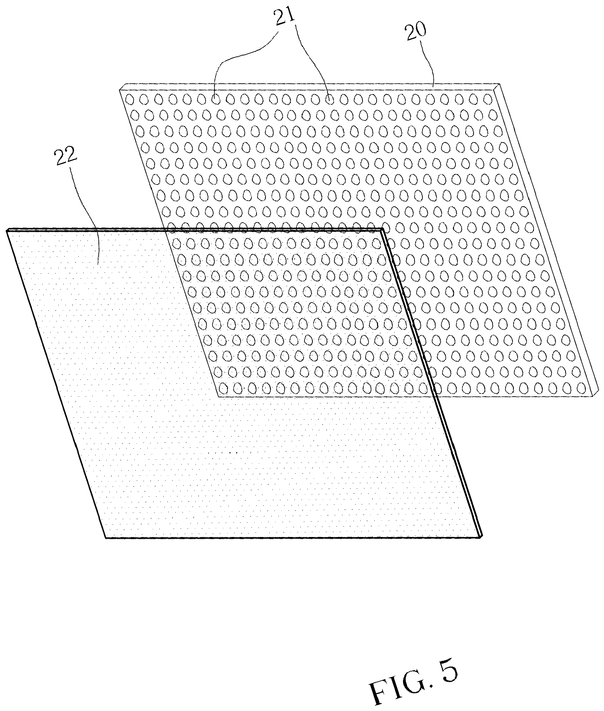

FIG.4 is a diagram showing internal components of the multi-sided vending machine 10. FIG.5 is a diagram showing a touch panel 22 overlaid on top of the display panel 20. The touch panels 22 allow the customers to make selections of items by touching the touch panels 22 on the display panel 20. If an item is shown on the display panels 20, the customer can simply touch the item to make selection of the item and begin the process of purchasing. The display panels 20 may be light-emitting diode (LED) arrays containing two-dimensional arrays of LEDs 21. Each of the display panels 20 may also be other types of displays, such as an organic light-emitting diode (OLED) display or a liquid crystal display (LCD).

As shown in FIG. 4, a product storage compartment 34 is disposed within the multi-sided vending machine 10 and contains the items for sale. The product storage compartment 34 includes a product storage opening 36 for releasing purchased items. The multi-sided vending machine 10 also includes a plurality of delivery ramps 40 disposed below a rotatable ramp 38 and above the dispensing slots 32. The multi-sided vending machine 10 contains a user interface 16 for receiving input from the customers through the touch panels 22 and sending feedbacks to the customers through the display panels 20. According the received inputs, a controller 18 controls the product storage compartment 34 to dispense the selected item by controlling a motor 24 to turn the rotatable ramp 38 toward the a delivery ramp 40 and the product storage opening 36 on the selected side. The controller 18 then controls the product storage compartment 34 to open the product storage opening 36 to release the selected item. The selected item would then slide down from the product storage compartment 34 through the rotatable ramp 38 onto the corresponding delivery ramp 40 on the selected side and enter the dispensing slot 32 on the selected side.

The multi-sided vending machine 10 also contains a memory 50 for storing product information 52, which include the images corresponding to products that are shown on the display panels 20 and the price information for each product. The memory 50 also includes advertising data 54 for showing advertisements when no customer is disposed nearby the multi-sided vending machine 10.

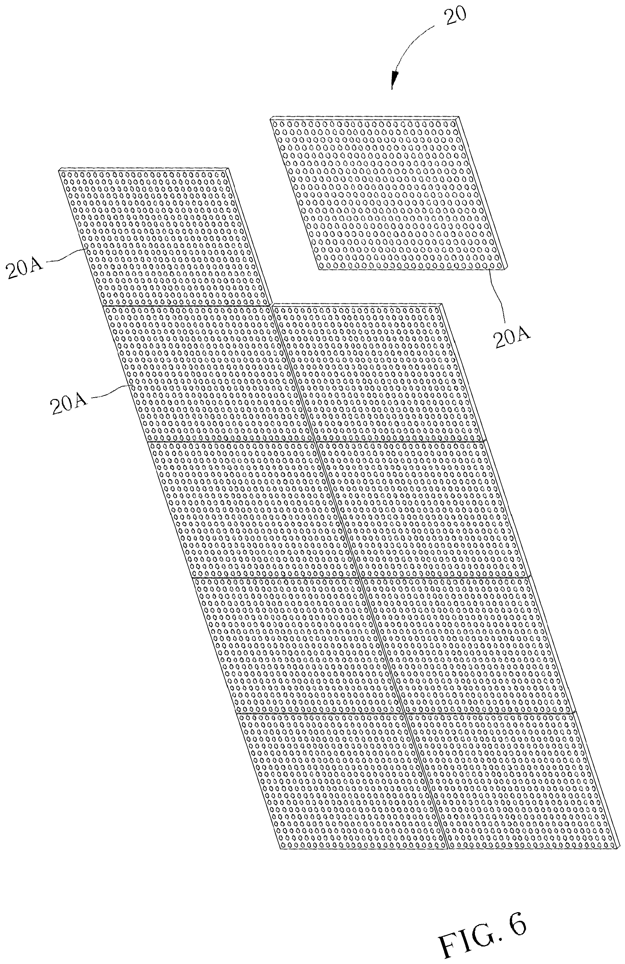

FIG.6 illustrates building a display panel 20 of the plurality of display panels 20 by joining many smaller display panels 20A together. As is known in the art, using a combination of smaller displays 20A can allow more flexibility and a less expensive design when building display panels 20. As shown in FIG.6, ten different smaller displays 20A are joined together to build the display panel 20.

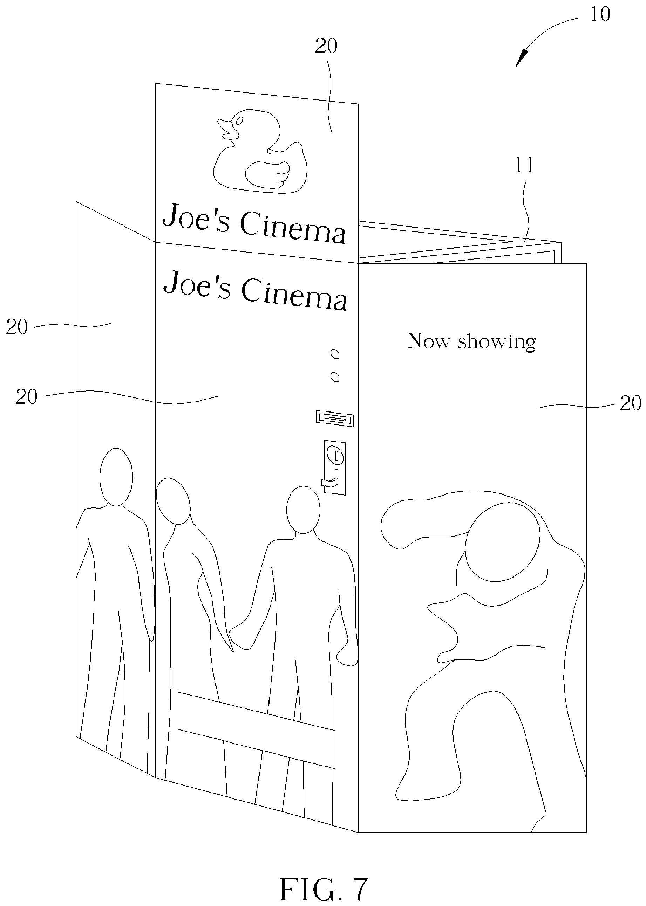

FIG.7 illustrates rotating multiple display panels 20 of the plurality of display panels 20 toward a same side in order to create a larger advertising space with the display panels 20. When the display panels 20 are rotated, it is possible to see a housing 11 of the multi-sided vending machine 10 that serves as the structure of the multi-sided vending machine 10 upon which all of the display panels 20 are installed. As shown in FIG.7 four different display panels 20 are rotated toward the same side in order to make a larger advertising space. These four different display panels 20 include display panels 20 from three different lateral sides as well as a display panel 20 from the top of the multi-sided vending machine 10. Display panels 20 from sides of the multi-sided vending machine 10 that are not currently being used for selling items can be rotated away from the housing 11 of the multi-sided vending machine 10 to create larger advertising spaces. In FIG.7, one side of the lower-middle display panel 20 can still be used for selling items in the multi-sided vending machine 10.

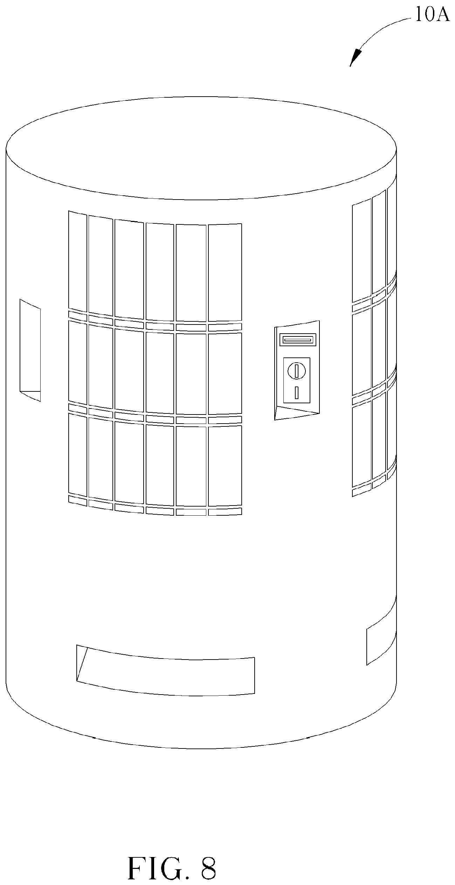

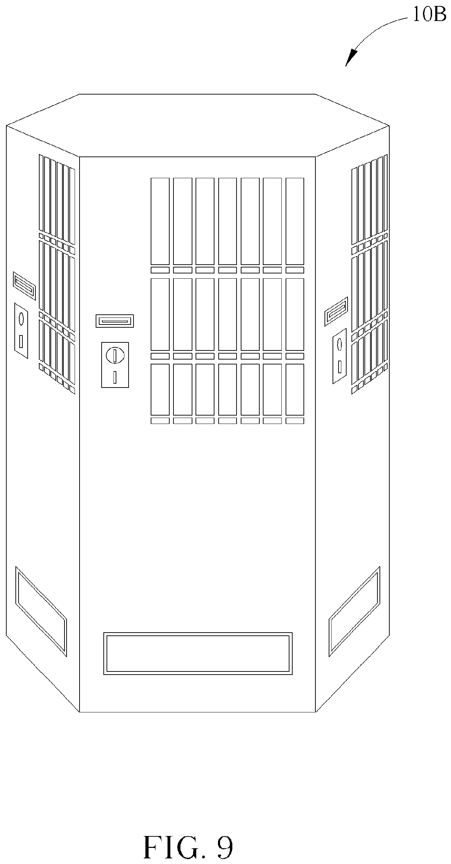

FIG.8 illustrates a multi-sided vending machine 10A having a cylindrical shape according to another embodiment of the present invention. FIG.9 illustrates a multi-sided vending machine 10B having a hexagonal prism shape according to yet another embodiment of the present invention. Any three dimensional shape can be used for creating the multi-sided vending machine 10.

The present invention uses more than one side of the multi-sided vending machine 10 for displaying and selling items. The multi-sided vending machine 10 allows vendors to use more area for displaying items than that of a traditional vending machine. Furthermore, a larger number of different items can potentially be sold through the multi-sided vending machine 10 since more variety of items can be displayed on the different sides of the multi-sided vending machine 10 than the traditional single sided vending machine. Multiple customers can buy items from the multi-sided vending machine 10 at the same time since different customers can interact with the multi-sided vending machine 10 simultaneously at different sides of the multi-sided vending machine 10. It reduces the wait time by potential customers purchasing through the multi-sided vending machine 10. Thus, the multi-sided vending machine 10 can increase sales for the vendors yet not requiring an additional area needed to install the multi-sided vending machine 10. Advertising revenue can also bring additional profit to the vendors.

## Claims

1. A multi-sided vending machine (10), **characterized by** comprising:
a housing (11);
a product storage compartment (34) disposed within the housing (11), the product storage compartment (34) storing items for sale;
a plurality of displays (20) disposed outside the housing (11), each display (20) of the plurality of displays (20) being disposed on a different side of the housing (11), wherein the displays (20) show images corresponding to the items for sale;
a user interface (16) receiving instructions from a customer to purchase a selected item of the items for sale through a selected side of the multi-sided vending machine (10);
a plurality of money acceptors, each money acceptor of the plurality of money acceptors being disposed on a different side of the housing (11), a money acceptor of the plurality of money acceptors disposed on the selected side receiving money used to pay for the selected item;
a plurality of dispensing slots (32), each dispensing slot of the plurality of dispensing slots (32) being disposed on a different side of the housing (11), wherein a dispensing slot (32) of the plurality of dispensing slots (32) disposed on the selected side dispenses the selected item to the customer after the selected item is purchased;
a rotatable ramp (38) disposed within the housing (11) above the plurality of dispensing slots (32) and rotatable toward any of the different sides of the housing (11), the rotatable ramp (38) rotating toward the selected side and guiding the selected item into the dispensing slot disposed on the selected side;
a motor (24) turning the rotatable ramp (38) toward the selected side when the selected item is purchased from the selected side; and
a controller (18) controlling operation of the multi-sided vending machine (10), controlling the motor (24) to turn the rotatable ramp (38) toward the selected side, and controlling the product storage compartment (34) to release the selected item when the selected item is purchased from the selected side.

2. The multi-sided vending machine (10) of claim 1, **characterized by** further comprising a plurality of delivery ramps (40) disposed within the housing (11) above the plurality of dispensing slots (32) and below the rotatable ramp (38), each delivery ramp (32) of the plurality of delivery ramps (40) corresponding to one dispensing slot (32) of the plurality of dispensing slots (32), a delivery ramp (40) of the plurality of delivery ramps (40) disposed on the selected side guiding the selected item into the dispensing slot (32) disposed on the selected side after receiving the selected item from the rotatable ramp (38).

3. The multi-sided vending machine (10) of claim 1 or 2, **characterized in that** the plurality of displays (20) are light-emitting diode arrays.

4. The multi-sided vending machine (10) of any of the preceding claims, **characterized by** further comprising a plurality of touch panels (22) formed over the plurality of displays (20), the plurality of touch panels (22) receiving touch input from the customer and providing this touch input to the user interface (16).

5. The multi-sided vending machine (10) of any of the preceding claims, **characterized in that** the money acceptors comprise bill acceptors (26) and coin acceptors (28).

6. The multi-sided vending machine (10) of any of the preceding claims, **characterized by** further comprising a memory (50) storing product data related to the items for sale and storing advertisement data.

7. The multi-sided vending machine (10) of claim 6, **characterized by** further comprising a plurality of sensors, each sensor of the plurality of sensors (12) being disposed on a different side of the housing (11), the plurality of sensors (12) detecting when the customer comes near the multi-sided vending machine (10), wherein the controller (18) controls the plurality of displays (20) to stop showing advertisements and to show images corresponding to the items for sale when the customer comes near the multi-sided vending machine (10).

8. The multi-sided vending machine (10) of claim 6, **characterized by** further comprising a plurality of cameras, each camera of the plurality of cameras (14) being disposed on a different side of the housing (11), the plurality of cameras (14) detecting when the customer comes near the multi-sided vending machine (10), wherein the controller (18) controls the plurality of displays (20) to stop showing advertisements and to show images corresponding to the items for sale when the customer comes near the multi-sided vending machine (10).

9. The multi-sided vending machine (10) of claim 6, **characterized in that** multiple displays (20A) of the plurality of displays (20) are used in conjunction with one another to create a large advertisement.

10. The multi-sided vending machine (10) of any of the preceding claims, **characterized in that** the housing (11) has the shape of a rectangular prism, and the plurality of displays (20), the plurality of money acceptors, and the plurality of dispensing slots (32) are disposed on multiple lateral sides of the rectangular prism.

11. A method of selling items for sale through a multi-sided vending machine (10), **characterized by** comprising:
receiving, through a user interface (16) of the multi-sided vending machine (10), instructions from a customer to purchase a selected item of items for sale through a selected side of the multi-sided vending machine (10), the multi-sided vending machine (10) comprising:
a housing (11);
a product storage compartment disposed within the housing (11), the product storage compartment storing the items for sale;
a plurality of displays (20) disposed outside the housing (11), each display of the plurality of displays (20) being disposed on a different side of the housing (11), wherein the displays (20) show images corresponding to the items for sale;
a plurality of money acceptors, each money acceptor of the plurality of money acceptors being disposed on a different side of the housing (11), a money acceptor of the plurality of money acceptors disposed on the selected side receiving money used to pay for the selected item;
a plurality of dispensing slots (32), each dispensing slot (32) of the plurality of dispensing slots (32) being disposed on a different side of the housing (11), wherein a dispensing slot (32) of the plurality of dispensing slots (32) disposed on the selected side dispenses the selected item to the customer after the selected item is purchased;
a rotatable ramp (38) disposed within the housing (11) above the plurality of dispensing slots (32) and rotatable toward any of the different sides of the housing (11), the rotatable ramp (38) rotating toward the selected side and guiding the selected item into the dispensing slot (32) disposed on the selected side; and
a motor (24) turning the rotatable ramp (38) toward the selected side when the selected item is purchased from the selected side; and
controlling the motor (24) to turn the rotatable ramp (38) toward the selected side and controlling the product storage compartment (34) to release the selected item onto the rotatable ramp (38) and down the dispensing slot (32) disposed on the selected side when the selected item is purchased from the selected side.

12. The method of claim 11, **characterized in that** a plurality of delivery ramps (40) are disposed within the housing (11) above the plurality of dispensing slots (32) and below the rotatable ramp (38), each delivery ramp (40) of the plurality of delivery ramps (40) corresponding to one dispensing slot (32) of the plurality of dispensing slots (32), a delivery ramp (40) of the plurality of delivery ramps (40) disposed on the selected side guiding the selected item into the dispensing slot (32) disposed on the selected side after receiving the selected item from the rotatable ramp (38).

13. The method of claim 11 or 12, **characterized in that** the plurality of displays (20) are light-emitting diode arrays.

14. The method of any of the preceding claims, **characterized by** further comprising receiving touch input from the customer through a plurality of touch panels (22) formed over the plurality of displays (20), the touch input being provided to the user interface (16) .

15. The method of any of the preceding claims, **characterized in that** the money acceptors comprise bill acceptors (26) and coin acceptors (28).

16. The method of any of the preceding claims, **characterized by** further comprising storing product data related to the items for sale and storing advertisement data in a memory (50) of the multi-sided vending machine (10).

17. The method of claim 16, **characterized in that** the multi-sided vending machine (10) further comprises a plurality of a plurality of sensors (12), each sensor of the plurality of sensors (12) being disposed on a different side of the housing (11), and the method further comprises:
detecting with the plurality of sensors (12) when the customer comes near the multi-sided vending machine (10); and
controlling the plurality of displays (20) to stop showing advertisements and to show images corresponding to the items for sale when the customer comes near the multi-sided vending machine (10).

18. The method of claim 16, **characterized in that** the multi-sided vending machine (10) further comprises a plurality of a plurality of cameras (14), each camera (14) of the plurality of cameras (14) being disposed on a different side of the housing (11), and the method further comprises:
detecting with the plurality of cameras (14) when the customer comes near the multi-sided vending machine (10); and
controlling the plurality of displays (20) to stop showing advertisements and to show images corresponding to the items for sale when the customer comes near the multi-sided vending machine (10).

19. The method of claim 16, **characterized in that** multiple displays (20A) of the plurality of displays (20) are used in conjunction with one another to create a large advertisement.

20. The method of any of the preceding claims, **characterized in that** the housing (11) has the shape of a rectangular prism, and the plurality of displays (20), the plurality of money acceptors, and the plurality of dispensing slots (32) are disposed on multiple lateral sides of the rectangular prism.
